Europäisches Patentamt

European Patent Office

Office européen des brevets

(11) Publication number: **0 412 791 A2**

# EUROPEAN PATENT APPLICATION

(21) Application number: 90308713.8

(22) Date of filing: 08.08.90

(51) Int. Cl.5: **B60T 8/00, B62D 6/00, B60K 31/00, B60G 17/00, B60Q 9/00**

(30) Priority: 10.08.89 GB 8918303

(43) Date of publication of application:
**13.02.91 Bulletin 91/07**

(84) Designated Contracting States:
**DE ES FR GB IT NL**

(71) Applicant: **LUCAS INDUSTRIES public limited company
Great King Street**

**Birmingham, B19 2XF West Midlands(GB)**

(72) Inventor: **Stenson, Bernadine Claire
41 Riverside Gardens
Henley-in-Arden, Warwickshire B95 5JX(GB)**

(74) Representative: **Duncan, Angus Henry et al
Barker, Brettell & Duncan 138 Hagley Road
Edgbaston Birmingham, B16 9PW(GB)**

(54) Monitoring and predicting road vehicle/road surface conditions.

(57) A system predicts the coefficient of friction ($\mu$) between a vehicle and the road surface over which the vehicle is travelling. Sensors (A) are provided which generate data on the condition of the road surface, the vehicle, and the ambient conditions. Each sensor has a low-level processor (B) which generates an estimate of $\mu$ in some cases by analysing the data from other sensors. The intermediate-level processors (C) then combine the low-level processed data to generate the estimates of $\mu$ based on the road surface, the vehicle and the ambient conditions. These three values are combined in a high-level processor (D) to generate a value of $\mu$ for the vehicle and signals for suitably modifying the performance of e.g. the braking system.

FIG.2

EP 0 412 791 A2

## MONITORING AND PREDICTING ROAD VEHICLE/ROAD SURFACE CONDITIONS

This invention relates to ways of monitoring and predicting the condition of a road surface by means of equipment mounted on a road vehicle, and of making use of the information obtained, primarily in the control of the vehicle itself, but the information may also be relayed to a remote point for other uses. Mainly, however, the value of the information derived lies in controlling the braking, suspension, and/or steering of the vehicle.

Proposals have been made in the past for monitoring road conditions and using the resulting information, for example, to warn the driver of potential hazards. In particular it has been proposed to sense the surface temperature and use this to predict the possibility of there being ice on the road. More sophisticated known proposals have involved scanning the road surface ahead of the vehicle and using the information to adjust the suspension and/or control speed or braking.

The principal aim of the present invention is to go substantially further than this and, by combining input signals from a number of different sources, to derive information of a high quality for use, as indicated above, primarily in controlling the braking behaviour, but also capable of use in other ways.

Accordingly to the invention in its broadest aspect we propose a method of generating a value to indicate and predict the coefficient of friction between a vehicle and the surface on which it is travelling, including the steps of:

a) obtaining from a plurality of sensors data concerning the conditions of the vehicle, the surface and the environmental conditions;

b) storing the data from the sensors in a common data store;

c) generating from the data in the store an output indicative of the coefficient of friction between the vehicle and the surface, wherein the interpretation of the data from at least one of the sensors is modified in dependence upon the data from at least one other sensor.

In this way we derive from the information obtained the value of $\mu$, the coefficient of friction between the tyres of the vehicle and the road surface. This can be used to modulate the braking strategy, for example by limiting or modifying the fluid pressure in a fluid-pressure braking system, and altering the distribution of the braking effort between the different axles, or even between the different sides of the vehicle.

For transmission to a remote point, for example a traffic monitoring station, we may employ only the first and second outputs to produce a signal representative of the road conditions independent of the nature and behaviour of the vehicle on which the measuring equipment is carried.

In a preferred arrangement we handle the signals at four different levels; first there are the sensors (to be described in more detail later) which in general produce analogue signals. These are processed at a low level, and will normally be converted to digital form. The third stage is the combination of this digital information in the intermediate-level processors to produce the three outputs, and finally in the fourth stage these three outputs are combined to predict the value of $\mu$.

An important point to note is that, as will become apparent later, we can continuously not only monitor the instantaneous state of the road/vehicle relationship (primarily $\mu$), but also predict it by using sensors which are looking at the road surface ahead of the vehicle, so that corrective action, for example on the braking, suspension or steering system, can be taken in good time.

Of course the inputs from the various low-level processors are not fed solely to their principally associated low and intermediate-level processors. On the contrary, there will be a certain amount of cross-feeding. For example the processor handling the road surface information will also need to have an input dependent on the speed of the vehicle, since this will affect the signals from the surface sensors.

The reliability of the information is ultimately dependent on the quality and nature of the sensors. They can be of many different kinds. For determining the parameters of the road surface we look at both its macro-texture, which refers to particles of sizes from 0.5 mm to 50mm, and its micro-texture, which we define as particles below 0.5mm. The effect of the macro-texture is to allow water to be forced out of the contact patch between the tyre and the road and is the most important characteristic of the surface for contributing to adhesion at high speed.

The effect of the micro-texture is to break up the residual film of water left between the tyre and road after most of the water has been forced out by the effect of the macro-texture. It is important for adhesion at low speeds.

Potholes and bumps form another factor affecting road conditions. Although they do not contribute directly to adhesion they obviously affect road holding, and their presence needs to be observed, and if possible predicted, if the vehicle is to maintain safe operation.

The following are examples of possible sensors used to determine the macro-structure and micro-structure of the road surface, either immediately below the vehicle or up to as much as 150 metres ahead of the vehicle or both:
visible light sensor
thermal sensor
laser
microwave radar
ultrasonic probe
electro-optic sensor
accelerometer
microphone or acoustic sensor

The analogue signal from such a sensor is fed to a low-level processor which, in a preferred arrangement, digitises it and takes an average voltage value, as well as analysing its frequency spectrum and determining the relative amplitudes of the different frequencies to obtain a parameter characteristic of the road surface.

The wetness of the road can be gauged by comparing the amplitudes of the specular reflection from the surface (e.g. using a visible light camera or microwave radar or a thermal sensor) and the diffuse reflection. The depth of water can be determined by computing the attenuation of the signal as compared with a signal which is not affected by water.

According to another aspect of the invention the output of a thermal sensor, microwave radar, visual (i.e. video) sensor or an acoustic or ultrasonic sensor is used to discriminate between different road surfaces by first digitising the analogue signal from it in a low-level processor which takes the average voltage of the returned signal, analyses the frequency spectrum to determine characteristic frequencies, and determines the relative amplitudes of those frequencies or uses any other method to derive a parameter characteristic of the road surface.

To determine the presence and depth of water on the road surface, using an appropriate one of the sensors mentioned above, the amplitudes of the specular reflection and diffuse reflection can be compared, and account can be taken of the attenuation of one of these or other inputs.

The signals from the various road condition sensors are combined in the associated intermediate-level processor, to which other parameters, obtained from other sensors, are also fed where they might affect the sensitivity or response of road condition sensors, and they are used to derive a 'signature' representative of the road surface.

A similar approach is used to determine the environmental conditions. Here we use sensors to measure ambient temperature, road surface temperature, relative humidity, ambient light, direction of travel, relative wind, and other factors.

It must be understood that, especially in the case of road texture and condition sensors, no one sensor can give an absolute value of a parameter with certainty. Rather, the information from different sensors is compared, with appropriate weighting, to arrive at a reliable estimate of the parameter, and of the probability that the estimate is correct. Basically what is used is an expert system, and it relies heavily on comparing the observed information with stored information (based on a learning program) and making an inference.

For instance, in order to interpret the signal from any one of the texture sensors it is necessary to know vehicle speed and environmental information. The environmental information required may include one or more of the following: depth of water on road, ambient temperature, road surface temperature and relative humidity. Sensors are provided to measure these parameters.

The sensors of the vehicle condition have, generally speaking, an easier task, and a greater certainty of their individual results. They could sense, for example, the following parameters:-
the weight on the wheels
tyre pressure
tyre tread depth
tyre temperature
speed over ground

In addition strain gauges may be present to provide indications of the stresses on certain components of the suspension, indicating accelerations in various directions. It is also possible to key in manually a signal indicating the make and quality of the tyres fitted to the vehicle, and this will trigger the extraction from stored data within the processor of information about the known or expected parameters of that tyre.

It may also be possible to derive an estimate of the coefficient of friction dynamically by observing the rolling radius, the tread depth and tyre pressure, and the number of revolutions performed by the wheel in covering a given distance. A more direct method may involve strain gauges or transducers within the tread of the tyre itself.

In the accompanying drawings:
Figure 1 indicates diagrammatically the possible placing of various sensors and signal processing units in a passenger road vehicle;
Figure 2 is a block circuit diagram showing the four-level approach to arriving at a probable figure for the coefficient of friction;
Figure 3 is a simple block diagram of the speed banding operation;
Figures 4 and 5 show in greater detail block circuit diagrams one of the low and medium level processors for road surface texture;
Figures 6A and 6B form a flow chart indicating the steps taken by the system of Figure 3 producing the road surface texture 'signature' by matching to stored information;
Figure 7 is a block diagram of the high-level processor;

Figure 8 shows a typical rectifier and filter circuit arrangement for handling the output of one of the road surface texture sensors; and

Figure 9 is an overall block diagram showing the sensors feeding through respective analogue-digital converters into a single chip processor able to do all the levels of processing.

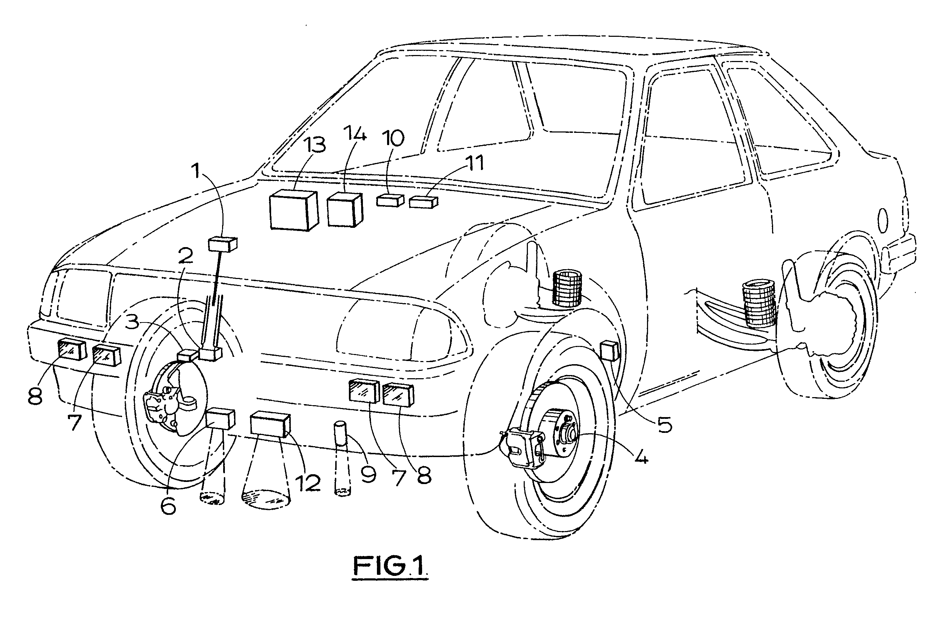

Figure 1 shows suitable locations for various sensors that may gather data regarding the conditions of the vehicle, the road surface, and the ambient air.

The vehicle sensors include a wheel load sensor 1, a steering angle sensor 2, a wheel vibration sensor 3, a wheel speed sensor and revolution counter 4 and a tyre pressure sensor 5. The road surface is monitored by laser, thermal and visual surface texture detectors 6, 7 and 8, and a surface temperature detector 9. The ambient air is monitored for temperature by a detector 10 and relative humidity by a detector 11. The road speed of the vehicle is measured by a sensor 12 scanning the road surface. An adhesion monitoring control unit 13 and a vehicle system control unit 14 are mounted on the engine bay bulkhead.

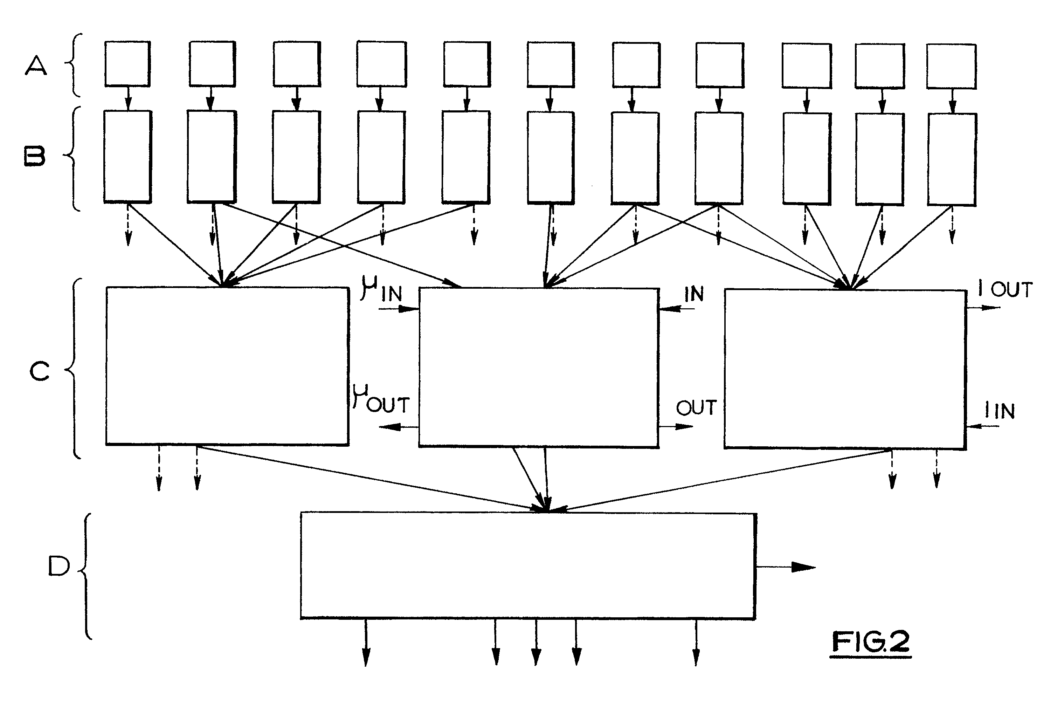

The various sensors pass their signals to the low-level processors which each derive, from the associated sensor, a signal representative of that sensor's description of the texture, environmental or vehicle dynamics as the case may be. In Figure 2, the first level of signal handling is represented by the boxes A. Each box represents a sensor such as those shown in Figure 1. The signal from each sensor is sent to one of a set of low-level processors B.

The low-level processors B may perform only simple tasks, such as convert the sensor signals to a form suitable for further processing e.g.converts of analogue sensor signals into digital signals.

At this processing level, the signal may also be banded in order to compress the data. For instance, it is sufficient to know into which one of twelve speed ranges or bands the vehicle speed falls, rather than the exact speed of the vehicle, in order to perform further calculation to a suitably high degree of accuracy. Similarly, it is only necessary to divide ambient temperature into three bands.

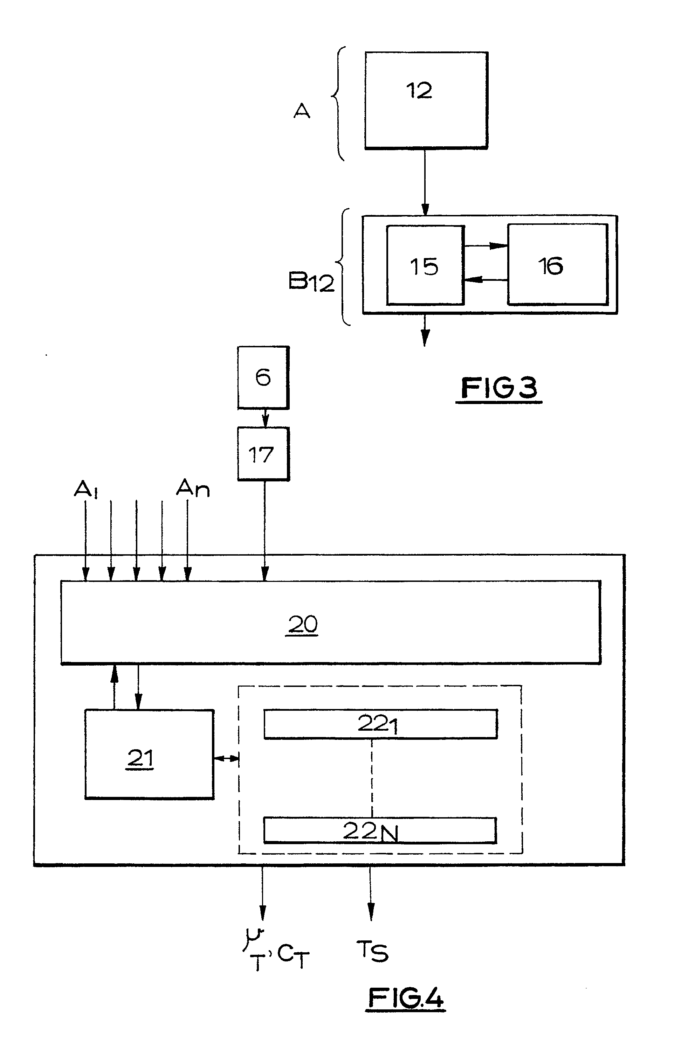

In order to determine the band that a particular signal falls into it must be compared with a set of rules. Figure 3 shows this operation diagramatically for the road speed signals. The road speed signals are fed from the road speed sensors 12 to the low-level processor for road speed $B_{12}$ which comprises a value matcher 15 and a speed-rule store 16. The matcher 15 compares the speed signal with each of the rules in the store 16 until it finds a match, and then outputs a signal in accordance with the rule. Since the speed rules are fixed, the store 16 may be a ROM.

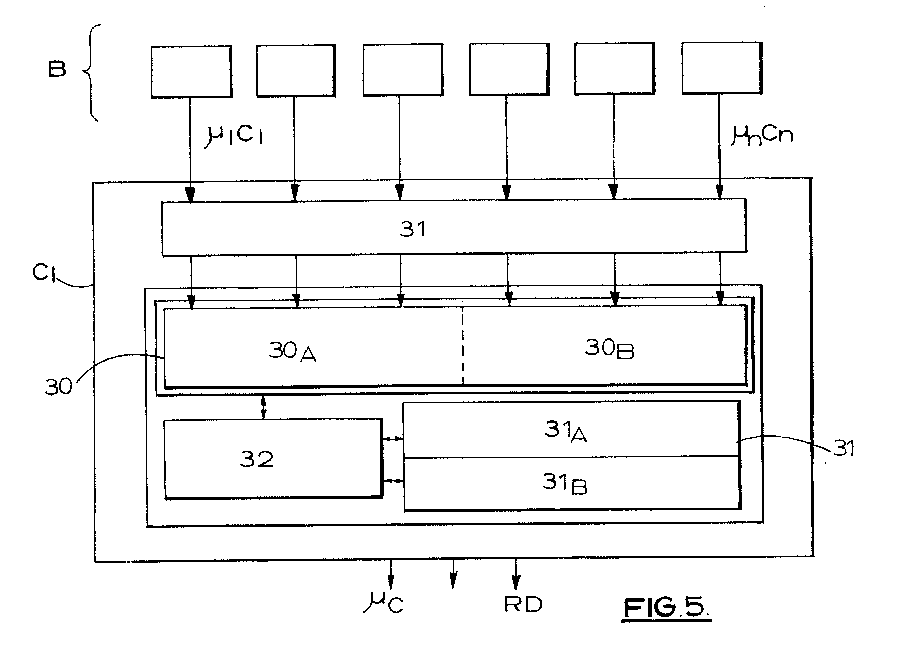

The low-level processing required for texture signals is considerably more complicated, and will be described with reference to Figure 4. The signal from a texture sensor (e.g. the laser sensor 6) is influenced by factors other than purely the texture of the road. For instance, the signal will be affected by the road surface wetness, the vehicle speed etc. Therefore, in order to provide a consistent output, the low-level processor for the texture sensor 6 must also be provided with inputs from other relevant sensors. This is done by writing the signals from each sensor $A_1$ to $A_n$ into a "blackboard" 20. Of course, any signal conversions (e.g. analogue to digital or banding) will be performed first, as shown at 17. The blackboard 20 is a database which may be accessed by the whole of the system, and is generally an area of RAM accessible by the system processor. An inference engine 21, typically a program executing on the system control processor, analyses all relevant data stored in the blackboard 20 to decide which one of a number of sets of rules $22_1$ to $22_n$ (together forming a knowledge base 22) should be used to interpret the texture signal. Once the most suitable set of rules $22_1$ to $22_n$ has been selected it may be used to generate an output signal in the same way as the banding rules are used to process temperature signals, as described above.

The result of searching the knowledge base 22 is to identify a surface type $T_s$ and a coefficient of friction $\mu_T$. Through experiments, the reliability of the calculated value of $\mu$ for any surface can be found and the results stored in the knowledge base. This information is used to associate a certainty factor $C_T$ with the value of $\mu_T$. The certainty factor is a measure of confidence in the accuracy of the output from this stage of processing.

All the outputs from the low-level processors are fed to the input database or blackboard of the intermediate-level processor shown as 30 in Figure 5. The intermediate level processor, also contains a 'knowledge' database 31 holding information obtained from earlier learning of parameters from known data. The processor compares these, giving different weightings (again, from past experience) to the indications from the different sensors, and arrives at a conclusion.

The intermediate-level processors C each receive inputs from all of the low-level processors B. These inputs take the form of a coefficient of friction value $\mu$ and its associated confidence factor C generated by the low-level processors. Figure 5 shows the intermediate-level processing for the signals derived from sensors reading the road surface. The first processing stage is alignment of the signals, represented as 31 in Figure 4. Alignment ensures that all the signals to be stored in the blackboard relate to the same point on the road surface. Thus signals from sensors which, due to their arrangement on the vehicle or their mode of operation, are read from points on the road surface ahead of the vehicle are delayed to bring them into step with the signals that relate to the road surface close to the vehicle.

The aligned events are then classified according to the type of sensor from which they originate. For instance the change of output from the thermal camera could be labelled as an "infra-red" event. The blackboard is divided into areas known as panes 30A,30B. The choice of the panes 30A, 30B in which any event is stored is dependent on the classification of the event. This allows events of a similar nature to be grouped together in the blackboard and also allows events to be classified into "current" or "preview" corresponding to signals obtained from the surface currently under the vehicle or to the surface some way ahead.

Fig. 5 shows that the blackboard is divided into panes corresponding to the current road surface 30A and the previewed road surface 30B. This allows events to be classified as "current" or "preview". These panes can be further divided into panes corresponding to individual low level processors.

The purpose of dividing the blackboard in this way is twofold:

1. to improve efficiency by allowing chunks or "islands" of the solution to be built up independently. If a problem arises with one of the panes e.g. the laser stops working, then the effect of this on the overall solution can be assessed and an output produced with a lower certainty factor.
2. the panes can be used as a short term history structure - this is important for time constrained reasoning.

The next processing step is known as "attribute fusion". Attribute fusion refers to combining information about the same parameter obtained from different sensors. In this system it is achieved through the use of production rules. The rules are stored in a knowledge base 31 which is searched by an inference engine 32. The knowledge base is shown divided into a "road monitoring knowledge base" 31A and a "road preview knowledge base" 31B. It would be possible to divide these further if necessary. The purpose of dividing the knowledge base 31 is to improve search efficiency by focusing on the relevant rules. This is important in reducing processing overheads.

The central problem of attribute fusion is how to combine the values of $\mu$ output by the individual low level processors to produce a better estimate of $\mu$. This is achieved as follows:

At present the range of values of $\mu$ is divided into HIGH, MEDIUM, and LOW. The grade of membership of the individual values of $\mu$ to these fuzzy sets is checked and then they are combined to produce an overall value of $\mu$. The rules for doing this are held in the knowledge base.

In the case of Figure 4 this is a conclusion as to the nature of the road surface. At the same time the conclusion is accompanied by an overall 'certainty' factor which enables the subsequent high-level processing step to take into account how sure this conclusion is in its subsequent overall instructions to the braking system.

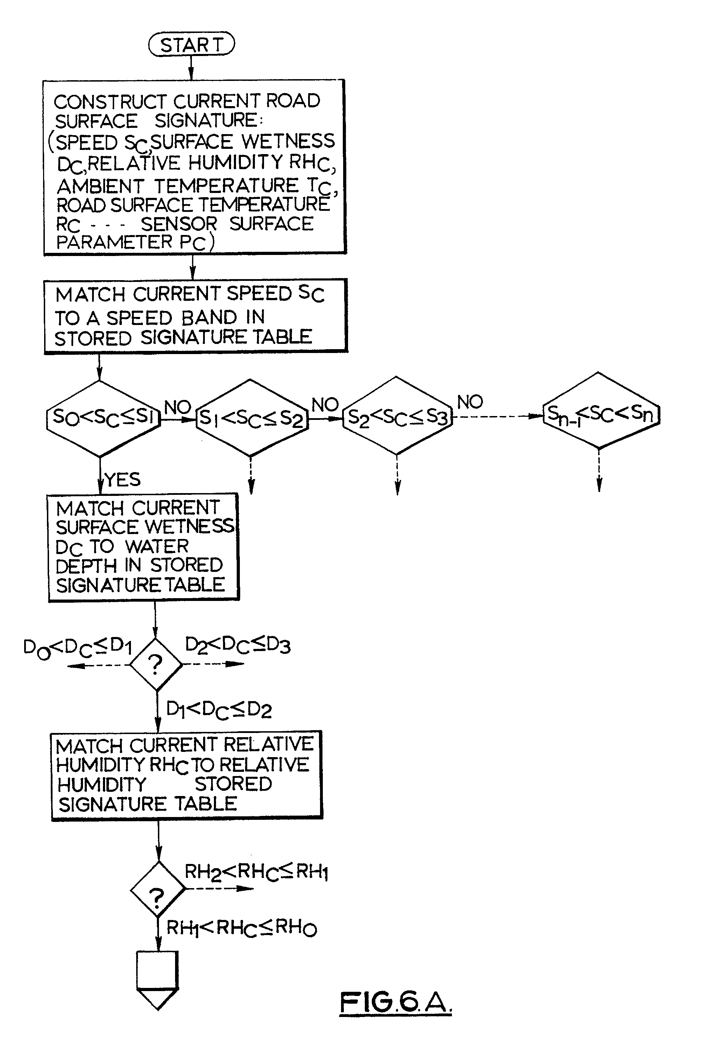

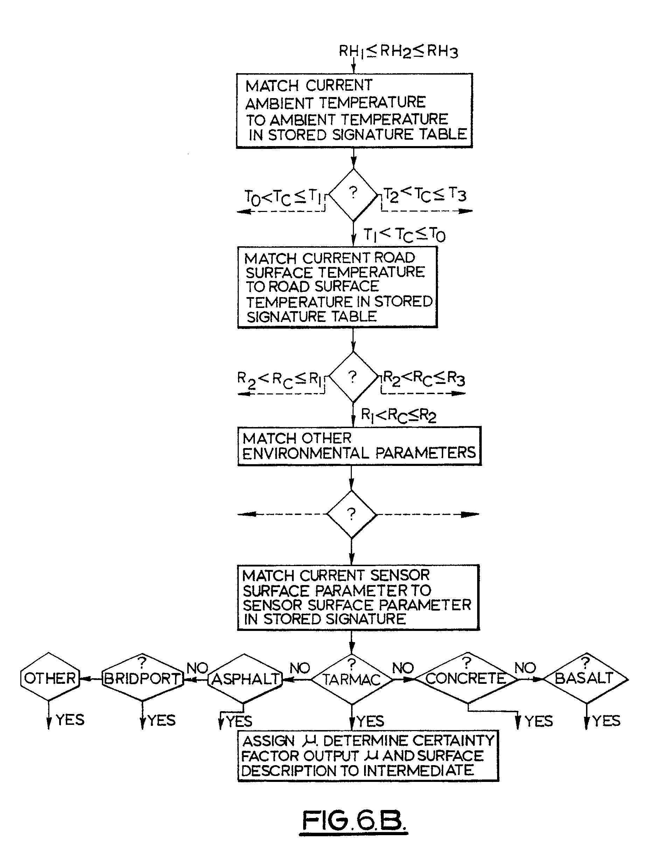

Referring to Figures 6A and 6B, these show a flow chart for arriving at a decision on the probable value of $\mu$ from the inputs of the surface texture sensors and the stored information. It will be seen that the observed current parameters are compared with values stored in a signature table to identify the band of values within which they fall, this information being then passed on. Finally by matching the resulting combination of parameters to the stored signatures of the known various kinds of road surface it is possible to identify the probable nature of the road surface present and in addition to assign to that finding a 'certainty' factor.

The data coming from the road surface texture sensors is the most difficult to handle; the input from the light (including laser) and thermal cameras will require image processing techniques for analysis. Use may be made of sensors already provided for other purposes, e.g. collision-avoidance system cameras or radars. Generally speaking, it will be necessary to have more than one sensor measuring the same parameter. For example road surface texture will be viewed by a light camera during daylight but in hours of darkness reliance can automatically be switched primarily to the thermal camera.

Another particular difficulty is in assessing surface wetness. For example when the vehicle is moving into the sunset on a summer's evening the road ahead could appear wet to a camera using light. So that particular signature could well mean 'wet tarmac' most of the time but for the remainder of the time such an interpretation would be wrong.

It must be remembered that there are two sets of sensors for road surface texture, one looking ahead, for prediction, and one looking downwards at the surface over which the vehicle is actually passing. Comparison of the inputs from the prediction sensors with (after a delay) the inputs from the 'downward' sensors helps in the learning process in that the more certain information from the 'downward' sensors is able to correct and improve the inferences made from the information obtained from the prediction sensors.

Because the sensors for environment and for vehicle dynamics have an easier problem the processors associated with these two inputs may not need to be expert systems. The high level processor to which all three are fed is based on blackboard architecture. The intermediate level modules are the knowledge sources of the high level system. The blackboard can be thought of as a global data base to which each of these knowledge sources writes its output when instructed to do so by a controller.

As well as feeding the high-level processor, the output of the intermediate-level ones on road surface texture and environmental conditions may also be passed to a remote point, outside the vehicle, for example a fixed central monitoring station that is maintaining an up-to-date picture of road conditions over a substantial area.

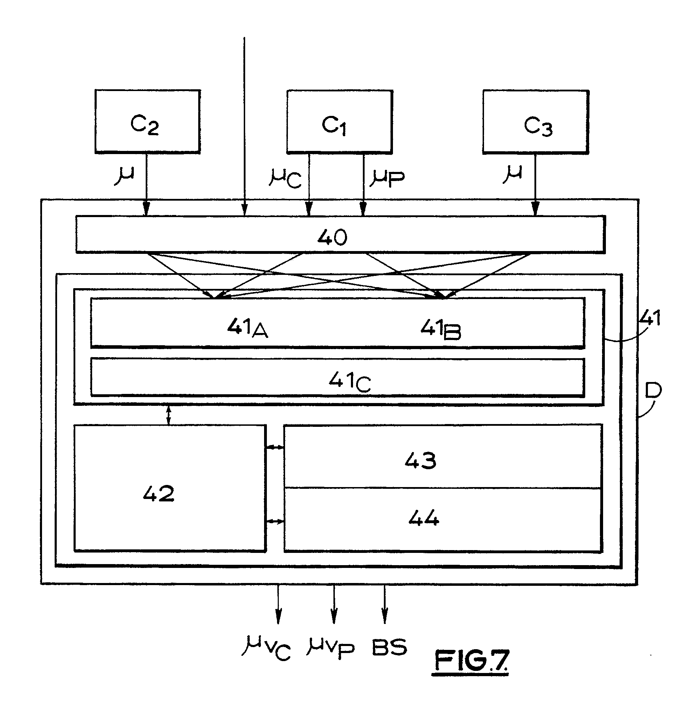

The high level processor D, shown in Figure 7, is similar in architecture to the low level processors. Within the high level processor D the current and predicted value of $\mu$ are combined with the knowledge of an expert driver to produce a braking strategy BS for a particular scenario. The driver's expertise will be stored as production rules.

The outputs from the high level processor are the current and predicted values of $\mu$ $(\mu_c, \mu_p)$ and a braking strategy BS.

The first processing step in the high-level processor is alignment 40. A blackboard database is provided which in the high-level processor D is divided into 3 panes 41A,41B,41C which respectively contain data on the current value of $\mu$ from each intermediate-level processor the preview value of $\mu$ and the different braking strategies available.

An inference engine 42 compares the values of $\mu$ in the blackboard 41 with those stored in a $\mu$-knowledge base 43 to find the known situation that most nearly matches the current conditions. When a match is found, a braking strategy BS is selected from a braking strategy knowledge-base 44, and a current and preview value of $\mu$ $(\mu_{vc}, \mu_{vp})$ for the vehicle are calculated.

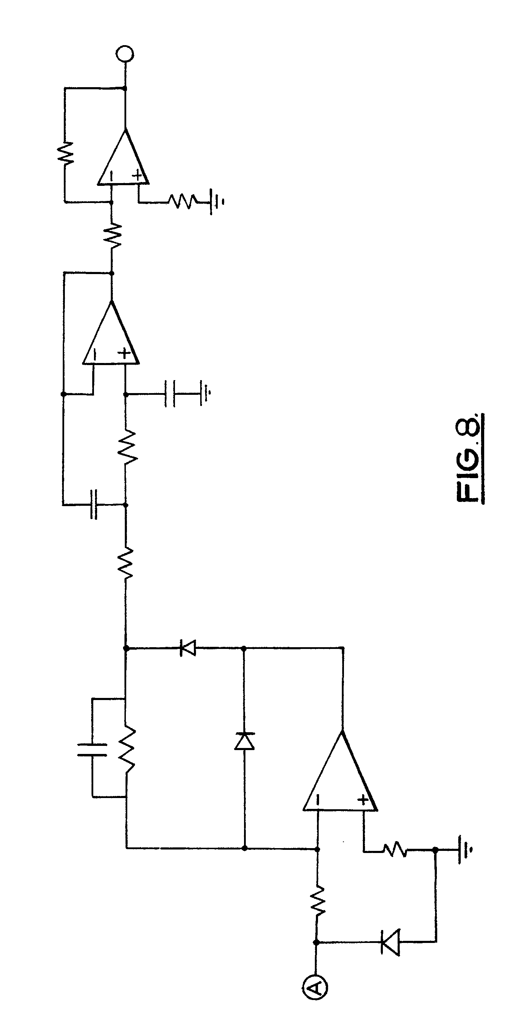

Referring now to Figure 8, this simply shows a typical circuit for rectifying and filtering the output of one of the surface texture sensors, making use of commercially available operational amplifiers acting as comparators. In a production version a single custom-built chip could be used.

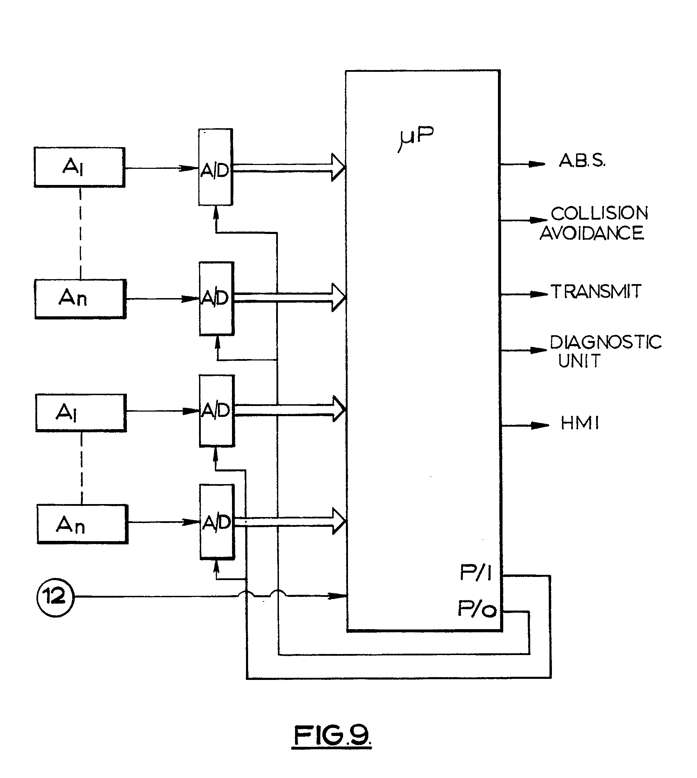

Figure 9 simply shows how the whole system could be reduced to a set of sensors with analogue/digital converters (which could be included in the sensor stages) feeding into a single chip which does all the levels of processing.

**Claims**

1. A method of generating a value to indicate and predict the coefficient of friction between a vehicle and the surface on which it is travelling, including the steps of:

a) obtaining from a plurality of sensors data concerning the conditions of the vehicle, the surface and the environmental conditions;

b) storing the data from the sensors in a common data store;

c) generating from the data in the store an output indicative of the coefficient of friction between the vehicle and the surface, wherein the interpretation of the data from at least one of the sensors is modified in dependence upon the data from at least one other sensor.

2. A method according to claim 1 in which a plurality of intermediate signals are generated from the data in the store and the output value is generated by combining the intermediate signals.

3. A method according to claim 2 in which there are three intermediate signals indicating, respectively, the condition of the surface, the vehicle, and the environmental conditions.

4. A method according to any one of claims 1 to 3 in which each item of data obtained from the sensors is stored with an associated confidence factor indicative of the accuracy of the item of data, the confidence factor influencing the effect on the output of the item of data in the store to which it relates.

5. A method according to any one of claims 1 to 3 in which at least one of the sensors obtains information about the condition of the surface a distance ahead of the vehicle and such data is used to obtain a preview value of the coefficient of friction which is combined with the data from at least one other sensor to generate one or more of the intermediate signals.

6. A method according to claim 5 in which the previous value of the coefficient of friction is compared, after a delay, with the current value of the coefficient of friction and the result used to update the certainty factor of future treatment by the preview sensor.

7. A method according to any one of claims 1 to 6 in which the output is generated by comparing the data in the store with a set of data obtained from predetermined conditions for which a value of the coefficient of friction is known.

8. A method according to claim 7 in which data obtained from the preview sensors which does not match any previously obtained data is stored and an estimate of the coefficient of friction for the corresponding road surface is obtained from the other sensors, this estimate being stored to provide an estimated preview value when similar data is obtained from future readings from the preview sensors.

9. A method according to claim 5 in which the preview value is obtained by comparing the data from the preview sensors with previously obtained data from known conditions under which the coefficient of friction is known.

10. A method of generating a signal representative of the instantaneous vehicle/road relationship including the steps of:

deriving signal from a number of sensors responsive to road conditions; performing individual low-level processing on at least some of the signals.

combining the signals in a intermediate-level processing step to produce a first output;

deriving signals from a number of sensors responsive to environmental conditions;

performing an individual low-level processing step on at least some of the signals;

combining the signals in an intermediate-level processing step to produce a second output;

deriving signals from a number of sensors responsive to vehicle conditions, and combining these signals, together with parameters representative of the permanent condition of the vehicle, to generate a third outout; and

combining the first, second and third outputs in a high-level processing step to generate an output signal representative of the instantaneous vehicle/road relationship, in particular the coefficient of friction.

FIG.1

FIG.2

EP 0 412 791 A2

FIG 3

FIG.4

FIG.5.

FIG.6.A.

$RH_1 \leq RH_2 \leq RH_3$

MATCH CURRENT
AMBIENT TEMPERATURE
TO AMBIENT TEMPERATURE
IN STORED SIGNATURE TABLE

$T_0 < T_C \leq T_1$ ◄— ? —► $T_2 < T_C \leq T_3$

$T_1 < T_C \leq T_0$

MATCH CURRENT ROAD
SURFACE TEMPERATURE
TO ROAD SURFACE
TEMPERATURE IN STORED
SIGNATURE TABLE

$R_2 < R_C \leq R_1$ ◄— ? —► $R_2 < R_C \leq R_3$

$R_1 < R_C \leq R_2$

MATCH OTHER
ENVIRONMENTAL PARAMETERS

◄— ? —►

MATCH CURRENT SENSOR
SURFACE PARAMETER TO
SENSOR SURFACE PARAMETER
IN STORED SIGNATURE

OTHER ◄— ? ◄—NO— BRIDPORT ◄—NO— ASPHALT ◄—NO— TARMAC —NO—► CONCRETE —NO—► BASALT

↓YES          ↓YES          ↓YES          ↓YES          ↓YES          ↓YES

ASSIGN $\mu$. DETERMINE CERTAINTY
FACTOR OUTPUT $\mu$ AND SURFACE
DESCRIPTION TO INTERMEDIATE

# FIG.6.B.

13

$C_2$  $C_1$  $C_3$

$\mu$  $\mu_C$  $\mu_P$  $\mu$

40

$41_A$  $41_B$  41

$41_C$  D

42  43

44

$\mu_{VC}$  $\mu_{VP}$  BS  FIG.7

14

FIG.8.

**FIG.9.**